# EUROPEAN PATENT APPLICATION

(11) **EP 2 178 146 A1**
(43) Date of publication of application: **21.04.2010**
(21) Application number: 08790367.0
(22) Date of filing: 05.08.2008
(51) Int. Cl.: H01M 8/04

(54) **FUEL SUPPLY DEVICE**

(30) Priority: 09.08.2007 JP 2007207591; 28.09.2007 JP 2007254020
(71) Applicant: Panasonic Corporation, Kadoma-shi Osaka 571-8501 (JP)
(72) Inventor: Kozu ,katsumi c/o Panasonic Corporation, Chuo-ku ,Osaka-shi,Osaka 540-6207 (JP); Hirakawa,Yasushi c/o Panasonic Corporation, Chuo-ku,Osaka-shi,Osaka 540-6207 (JP)
(74) Representative: Schwabe - Sandmair - Marx
(86) International application number: PCT/JP2008/002103
(87) International publication number: WO 2009/019856

(57) **Abstract**

A fuel supply device includes a holder, a first connector, a second connector, and a connection pipe. The holder has an apparatus holder part on which an electronic apparatus is mounted. The first connector is provided at the apparatus holder part. The second connector is to be connected to a fuel cartridge. The connection pipe connects the first connector with the second connector.

## Description

### TECHNICAL FIELD

The present invention relates to a fuel supply device for connecting an apparatus including a power generation section having a fuel cell and a fuel cartridge to each other so as to send fuel in the fuel cartridge to the power generation section side.

### BACKGROUND ART

Recently, with the rapid widespread of portable and cordless electronic apparatuses, as driving power sources for such electronic apparatuses, secondary batteries having a small size, light weight and large energy density have been increasingly demanded. Furthermore, much attention has been paid to fuel cells that can be continuously used for a long time with fuel supplied, rather than secondary batteries that need charging.

As small fuel cells to be mounted in small portable electronic apparatuses, fuel cells using a liquid fuel such as methanol, a methanol aqueous solution, and a formic acid aqueous solution have received much attention. Such fuels are harmful to human body. Therefore, it is considered that such fuels are supplied in a state in which they are filled in a fuel cartridge and injected into electronic apparatus by directly connecting a connector of the fuel cartridge and a connector at the electronic apparatus side on which a fuel cell is mounted. Then, the shapes of these connectors are being developed in order to prevent fuel from leaking (for example, Patent Document 1).

Electronic apparatuses, for example, portable phones, in which a fuel cell is to be mounted have become smaller, and accordingly the sizes of connectors have also become smaller. However, when connectors are small, it is not easy for users having poor eyesight, for example, elderly persons to reliably connect these connectors. Furthermore, it is difficult for children and elderly persons to supply fuel to the electronic apparatus side by pressing the fuel cartridge by hand while connecting the electronic apparatus to the fuel cartridge. In addition, if an excessive force is applied to the fuel cartridge in a state in which the fuel cartridge is connected to the electronic apparatus, the fuel cartridge or the electronic apparatus may be damaged in the vicinity of the connectors thereof.

Patent Document 1: Japanese Patent Unexamined Publication No. 2007-128850

### SUMMARY OF THE INVENTION

The present invention relates to a fuel supply device that facilitates sending fuel in a fuel cartridge to a power generation section side. The fuel supply device of the present invention includes a holder, a first connector, a second connector to be connected to a fuel cartridge, and a connection pipe. The holder includes an apparatus holder part on which an apparatus including at least a part of a power generation section having a fuel cell is mounted. The first connector to be connected to the apparatus is provided at the apparatus holder part. The connection pipe connects the first connector with the second connector. With the fuel supply device having such a structure, a user can connect the first connector to the apparatus only by fitting the apparatus into the apparatus holder part. When the second connector is connected to the fuel cartridge in this state, a fuel in the fuel cartridge can be sent to the power generation section side.

### BRIEF DESCRIPTION OF THE DRAWINGS

Fig. 1 is a schematic sectional view showing a state in which an electronic apparatus and a fuel cartridge are connected to a fuel supply device in accordance with a first exemplary embodiment of the present invention.
Fig. 2 is a schematic sectional view showing a state in which an electronic apparatus and a fuel cartridge are connected to a fuel supply device in accordance with a second exemplary embodiment of the present invention.
Fig. 3 is a schematic sectional view showing a state in which an electronic apparatus and a fuel cartridge are connected to another fuel supply device in accordance with the second exemplary embodiment of the present invention.
Fig. 4 is a schematic sectional view showing a state in which an electronic apparatus and a fuel cartridge are connected to a fuel supply device in accordance with a third exemplary embodiment of the present invention.
Fig. 5A is a top plan view showing a first connector of the fuel supply device shown in Fig. 4.
Fig. 5B is a top plan view showing a second connector of the fuel supply device shown in Fig. 4.
Fig. 5C is a sectional view taken on line C-C of the first connector shown in Fig. 5A.
Fig. 5D is a sectional view taken on line D-D of the second connector shown in Fig. 5B.
Fig. 6 is an enlarged schematic sectional view of a first connector and vicinity thereof, of a fuel supply device in accordance with a fourth exemplary embodiment of the present invention.
Fig. 7 is a schematic sectional view showing a state in which an electronic apparatus and a fuel cartridge are connected to a fuel supply device in accordance with a fifth exemplary embodiment of the present invention.
Fig. 8 is a sectional view showing structures of a first connector of the fuel supply device and a connector part of the electronic apparatus shown in Fig. 7.
Fig. 9 is a schematic sectional view showing a state in which an electronic apparatus and a fuel cartridge are connected to a fuel supply device in accordance with a sixth exemplary embodiment of the present invention.
Fig. 10 is a schematic sectional view showing a state in which an electronic apparatus and a fuel cartridge are connected to another fuel supply device in accordance with the sixth exemplary embodiment of the present invention.
Fig. 11A is a schematic sectional view showing a state in which an electronic apparatus and a fuel cartridge are connected to still another fuel supply device in accordance with the sixth exemplary embodiment of the present invention.
Fig. 11B is a sectional view showing a principal part of the fuel supply device shown in Fig. 11A.
Fig. 12 is a sectional view showing a principal part of a holder of a fuel supply device in accordance with a seventh exemplary embodiment of the present invention.
Fig. 13 is a schematic sectional view showing a state in which an electronic apparatus and a fuel cartridge are connected to a fuel supply device in accordance with an eighth exemplary embodiment of the present invention.
Fig. 14 is a schematic sectional view showing a state in which an electronic apparatus and a fuel cartridge are connected to another fuel supply device in accordance with the eighth exemplary embodiment of the present invention.
Fig. 15A is a schematic sectional view showing a state in which an electronic apparatus and a fuel cartridge are connected to a fuel supply device in accordance with a ninth exemplary embodiment of the present invention.
Fig. 15B is a schematic sectional view showing a state in which an electronic apparatus and a fuel cartridge are connected to a fuel supply device in accordance with the ninth exemplary embodiment of the present invention.

### REFERENCE MARKS IN THE DRAWINGS

- 1: electronic apparatus
- 1A, 1B: electronic apparatus (second apparatus)
- 2: power generation section
- 3: fuel cartridge
- 4: holder
- 4A: first holder
- 4B: second holder
- 4M: main body part
- 5, 5A, 5B, 5D: first connector
- 5C, 15, 74: spring
- 6, 6A: second connector
- 7: connection pipe
- 11: connector part
- 12, 73: valve body
- 13, 14, 72, 75: O-ring
- 16,: 76 reference plane
- 41, 41A, 41B, 41C, 41D: apparatus holder part
- 42: cartridge holder part
- 51: protrusion
- 52, 62: through hole
- 53: operation part
- 61: concave portion
- 63: recessed area
- 71: nozzle part
- 81, 82: holding member
- 411, 411A, 411B, 411C: supporting part
- 412: positioning part
- 413: flat spring part
- 414: allowance

### DETAILED DESCRIPTION OF THE PREFERRED EMBODIMENT

Hereinafter, exemplary embodiments of the present invention are described with reference to drawings. Note here that the present invention is not limited to the contents mentioned below as long as it is based on the basic features described in the description. Furthermore, in each exemplary embodiment, the same reference numerals are given to the same configurations as those in the preceding exemplary embodiments and detailed description thereof may be omitted. Furthermore, configurations peculiar to the exemplary embodiments can be appropriately combined.

### (FIRST EXEMPLARY EMBODIMENT)

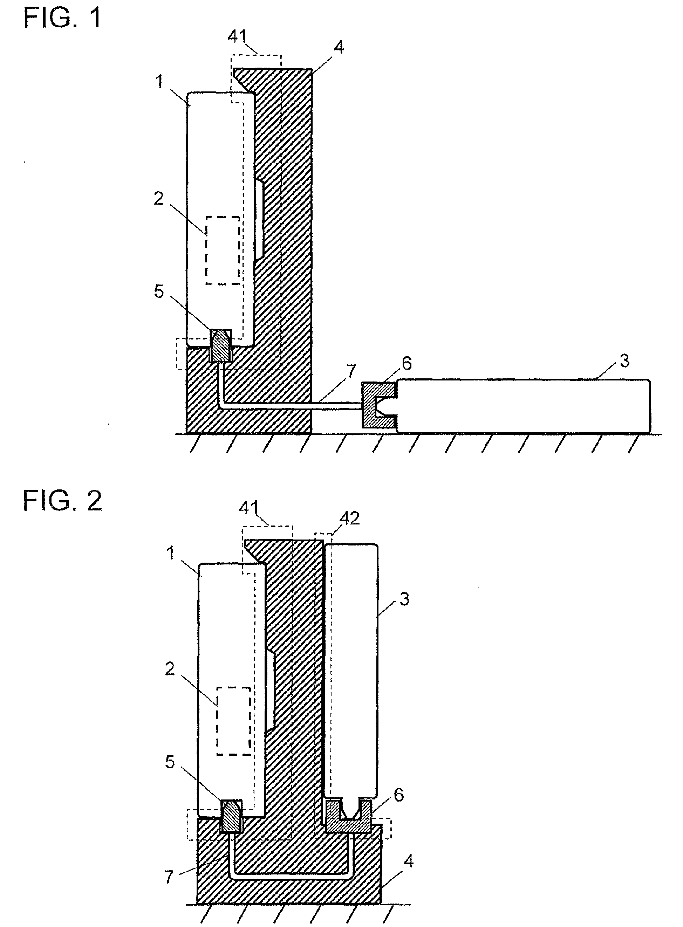

Fig. 1 is a schematic sectional view showing a state in which electronic apparatus 1 and fuel cartridge 3 are connected to a fuel supply device in accordance with a first exemplary embodiment of the present invention. Electronic apparatus 1 includes power generation section 2 formed of a fuel cell. Note here that detailed structures of the inside of electronic apparatus 1 and fuel cartridge 3 are omitted. The fuel supply device connects electronic apparatus 1 and fuel cartridge 3 so as to send fuel in fuel cartridge 3 to power generation section 2. This fuel supply device has holder 4, first connector 5, second connector 6, and connection pipe 7.

Holder 4 has apparatus holder part 41 on which electronic apparatus 1 is mounted. First connector 5 to be connected to electronic apparatus 1 is provided at apparatus holder part 41. Second connector 6 is to be connected to fuel cartridge 3. Connection pipe 7 connects first connector 5 with second connector 6.

Note here that power generation section 2 has a fuel cell and a tank for storing fuel for the fuel cell. In Fig. 1, power generation section 2 is built in electronic apparatus 1. However, power generation section 2 may be provided as a separate body from electronic apparatus 1 and may be detachable to a main body of electronic apparatus 1. Furthermore, only any one of the above-mentioned tank and the fuel cell may be provided as a separate body from electronic apparatus 1. Therefore, electronic apparatus 1 may be an apparatus including at least a part of a power generation section having a fuel cell.

Herein, the fuel is intended to mean a liquid fuel such as methanol or an aqueous solution thereof, and formic acid. However, the fuel may be a gas fuel. Furthermore, fuel cartridge 3 may employ a method of sending fuel by pressurizing from outside, or a method of sending fuel by an internal pressure that has been set to be high.

First connector 5, second connector 6, holder 4, and connection pipe 7 are made of resin and/or metal. In particular, first connector 5, second connector 6, and connection pipe 7 are made of a material that is not easily reacted with, dissolved in and eluted in fuel. It is preferable that apparatus holder part 41 has a shape in which electronic apparatus 1 is held in a position other than a position on which first connector 5 is provided, so that electronic apparatus 1 can be held. First connector 5 and second connector 6 have a mechanism for preventing fuel from leaking to the outside. However, the detail thereof is omitted herein.

With a fuel supply device having such a structure, a user can connect first connector 5 to electronic apparatus 1 only by fitting electronic apparatus 1 into apparatus holder part 41. When second connector 6 is connected to fuel cartridge 3 in this state, fuel in fuel cartridge 3 can be sent to the power generation section 2 side. Therefore, electronic apparatus 1 can be connected to fuel cartridge 3 easily. Furthermore, since fuel cartridge 3 is not directly linked to electronic apparatus 1 and electronic apparatus 1 is held by holder 4, the possibility that fuel cartridge 3 and electronic apparatus 1 is damaged in each connector part or in the periphery thereof is reduced.

Note here that in Fig. 1, second connector 6 is disposed apart from holder 4 but it may be provided on the side surface at the opposite side to apparatus holder part 41 of holder 4. When second connector 6 is disposed in this location, fuel cartridge 3 can be joined to second connector 6 by sliding fuel cartridge 3 on the floor so as to allow holder 4 to face fuel cartridge 3.

It is preferable that first connector 5 and second connector 6 have shapes that can be joined to each other. When electronic apparatus 1 and fuel cartridge 3 have connector parts that can be directly joined to each other, electronic apparatus 1 and first connector 5, and fuel cartridge 3 and second connector 6 can be joined to each other, respectively. Therefore, first connector 5 and second connector 6 can be joined to each other. Thus, it is possible to prevent wrongly connecting another fuel cartridge that has connector parts with different types and shapes and that is not suitable for electronic apparatus 1.

In Fig. 1, first connector 5 has a convex shape and second connector 6 has a concave shape. However, first connector 5 may have a concave shape and second connector 6 may have a convex shape as long as they can be joined to electronic apparatus 1 and fuel cartridge 3, respectively.

In particular, it is preferable that the diameter of first connector 5 is smaller than the length of electronic apparatus 1 in the thickness direction. In this way, this configuration can exhibit the effect of facilitating the connection with respect to fuel cartridge 3 when a connector part is provided on the position whose width is the narrowest on the side surface or bottom surface of electronic apparatus 1.

### (SECOND EXEMPLARY EMBODIMENT)

Fig. 2 is a schematic sectional view showing a state in which electronic apparatus 1 and fuel cartridge 3 are connected to a fuel supply device in accordance with a second exemplary embodiment of the present invention. This exemplary embodiment is different from the first exemplary embodiment in that holder 4 further includes cartridge holder part 42 capable of holding fuel cartridge 3 and second connector 6 is provided at cartridge holder part 42. The other configurations are the same as those in the first exemplary embodiment.

In this way, when holder 4 has a configuration capable of also holding fuel cartridge 3, electronic apparatus 1 and fuel cartridge 3 can be connected to each other easily only by setting both electronic apparatus 1 and fuel cartridge 3 on holder 4.

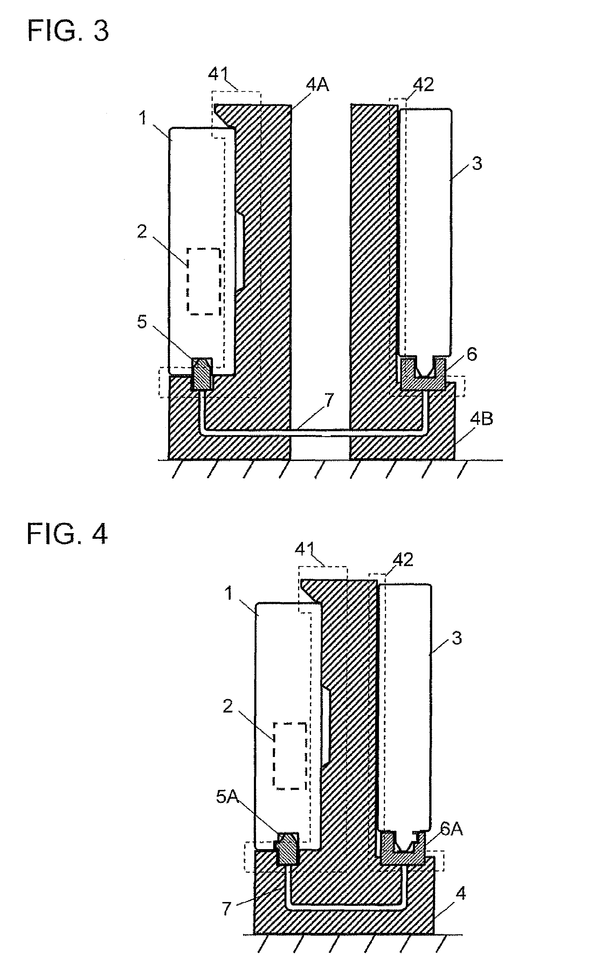

Fig. 3 is a schematic sectional view showing a state in which electronic apparatus 1 and fuel cartridge 3 are connected to another fuel supply device in accordance with the second exemplary embodiment of the present invention. The fuel supply device shown in Fig. 3 is different from the fuel supply device shown in Fig. 2 in that holder 4 is divided into first holder 4A and second holder 4B and that apparatus holder part 41 is provided on first holder 4A and cartridge holder part 42 is provided on second holder 4B. Also when the thus divided first holder 4A and second holder 4B are used and electronic apparatus 1 and fuel cartridge 3 are mounted on first holder 4A and second holder 4B, respectively, the same effect as that in Fig. 2 can be obtained.

### (THIRD EXEMPLARY EMBODIMENT)

Fig. 4 is a schematic sectional view showing a state in which electronic apparatus 1 and fuel cartridge 3 are connected to a fuel supply device in accordance with a third exemplary embodiment of the present invention. This exemplary embodiment is different from the second exemplary embodiment in that first connector 5A and second connector 6A have a pair of mechanical keys having special shapes capable of being joined to each other.

It is preferable that a connector part of electronic apparatus 1 and a connector part of fuel cartridge 3 have a pair of mechanical keys having special shapes capable of being joined to each other. Thus, it is possible to prevent a fuel cartridge that is a different type and is not suitable for electronic apparatus 1 from being connected to electronic apparatus 1. In response to this, it is preferable that first connector 5A and second connector 6A form a pair of mechanical keys.

Herein, the type of fuel cartridge 3 includes kinds and concentrations of fuels, the presence of an internal pressure for sending fuel, and the like. When fuel that is not suitable for power generation section 2 of electronic apparatus 1 is used, the possibility that the performance of the fuel cell of power generation section 2 may be degraded is high. A configuration of this exemplary embodiment can prevent such a failure. Note here that this configuration may be applied to the first exemplary embodiment.

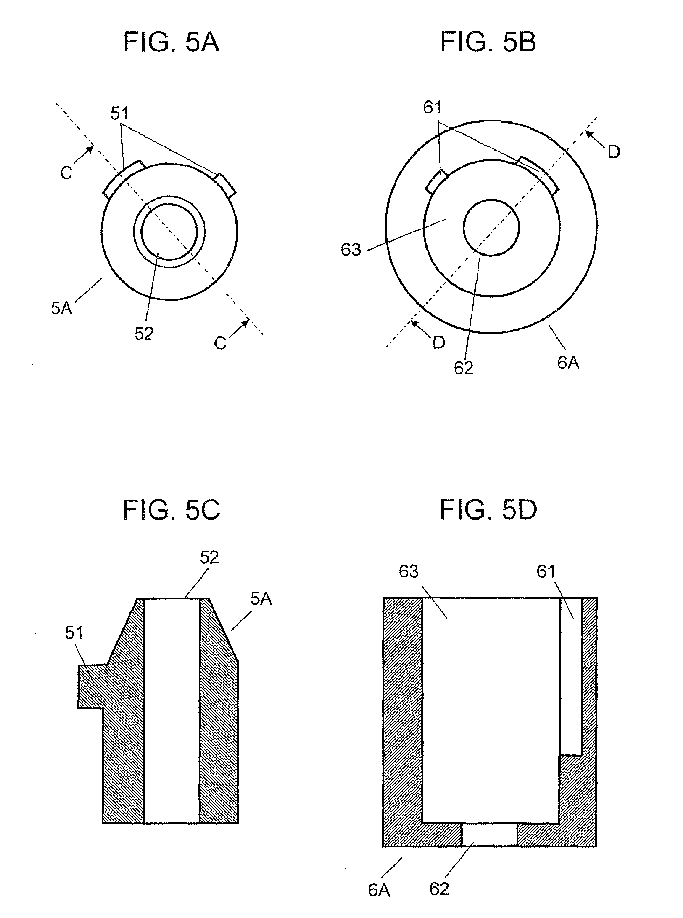

Figs. 5A to 5D show one example of the shapes of first connector 5A and second connector 6A. Fig. 5A is a top plan view of first connector 5A, Fig. 5B is a top plan view of second connector 6A, Fig. 5C is a sectional view taken on line C-C of first connector 5A, and Fig. 5D is a sectional view taken on line D-D of second connector 6A.

First connector 5A has through hole 52 through which fuel is allowed to pass in a center part, and two protrusions 51 on the external peripheral part. Meanwhile, in the center part of second connector 6A, recessed area 63 for accommodating a connector part of fuel cartridge 3, and through hole 62 through which a fuel is allowed to pass are provided next to recessed area 63. Furthermore, next to the outside of recessed area 63, concave portion 61 is provided in a position corresponding to protrusion 51. Note here that both first connector 5A and second connector 6A have mechanisms for preventing fuel from leaking to the outside, but the detail thereof is omitted herein.

In this structure, by matching protrusion 51 to concave portion 61, first connector 5A and second connector 6A can be joined to each other. That is to say, first connector 5A and second connector 6A have a pair of mechanical keys having specific shapes capable of being joined to each other. Note here that the shapes of the mechanical keys are not limited to this.

It is preferable that first connector 5A is provided rotatably with respect to holder 4. Although a connector part of electronic apparatus 1 matches to the mechanical key of first connector 5A, if the rotation positions thereof do not match to each other, they cannot be joined to each other. Even in such a case, when first connector 5A is rotatable with respect to holder 4, first connector 5A can be rotated and joined to the connector part of electronic apparatus 1.

### (FOURTH EXEMPLARY EMBODIMENT)

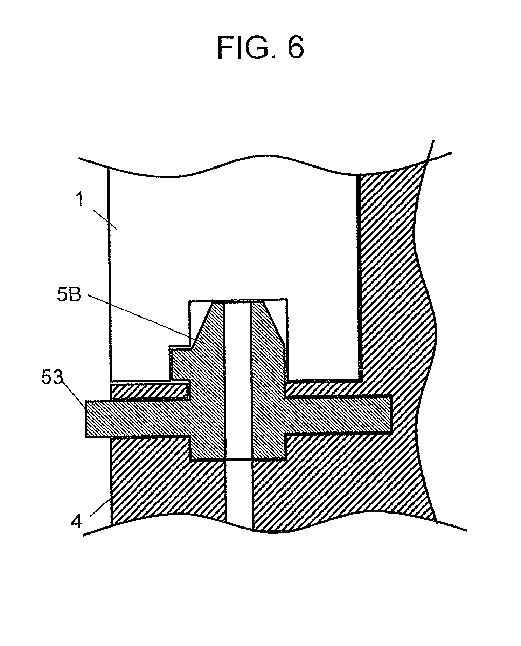

Fig. 6 is an enlarged schematic sectional view of first connector 5B and vicinity thereof, of a fuel supply device in accordance with a fourth exemplary embodiment of the present invention. This exemplary embodiment is different from the third exemplary embodiment in that first connector 5B has operation part 53 which protrudes from holder 4 and for rotating first connector 5B.

As described in the third exemplary embodiment, although a connector part of electronic apparatus 1 matches to the mechanical key of first connector 5A, if the rotation positions thereof do not match to each other, they cannot be joined to each other. Even in such a case, when first connector 5B is rotatable with respect to holder 4, first connector 5B can be rotated and joined to the connector part of electronic apparatus 1. At this time, the use of operation part 53 facilitates the rotation of first connector 5B.

Structures peculiar to the above-mentioned exemplary embodiments may be combined with each other. Note here that the first to ninth exemplary embodiments are described assuming that a liquid fuel is used. However, the present invention can be applied to a case where a gas fuel such as butane and hydrogen is used.

### (FIFTH EXEMPLARY EMBODIMENT)

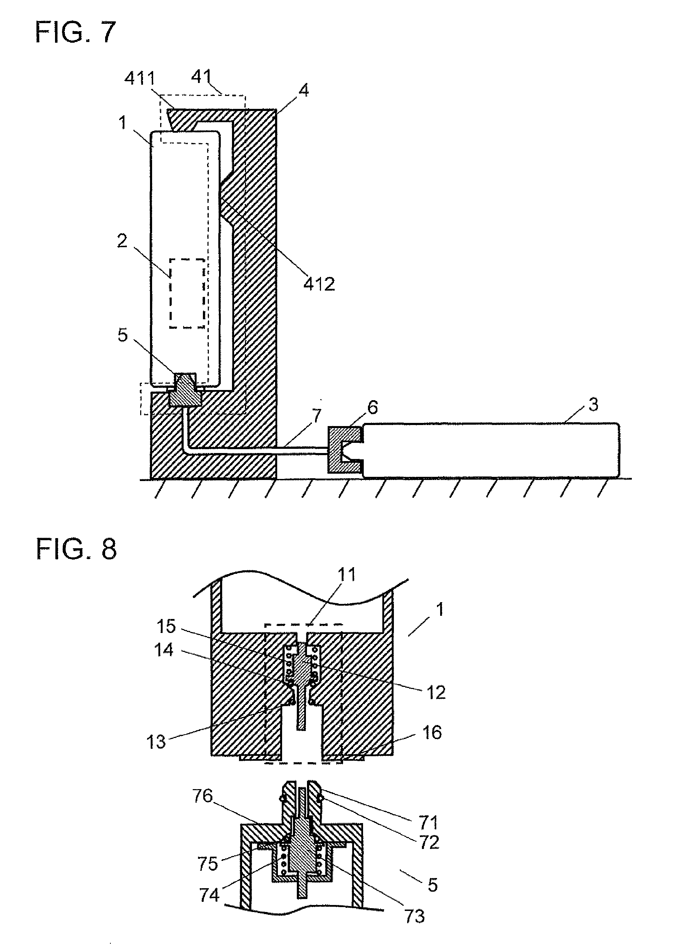

Fig. 7 is a schematic sectional view showing a state in which electronic apparatus 1 and fuel cartridge 3 are connected to a fuel supply device in accordance with a fifth exemplary embodiment of the present invention. The fuel supply device of this exemplary embodiment is different from that of the first exemplary embodiment in the structure of apparatus holder part 41.

A connector part of fuel cartridge 3 and connector part 11 of electronic apparatus 1 have structures in which fuel does not leak in a state in which they are not connected to each other. In this case, for example, the connector part of fuel cartridge 3 has a structure in which a valve is closed with the use of the force of a spring. Then, the connector part of fuel cartridge 3 may be directly connected to connector part 11.

However, when these connector parts are small, it is not easy for users with poor eyesight, for example, elderly persons to reliably connect these connector parts against the force of a spring. Furthermore, it is difficult for children and elderly persons to supply fuel to electronic apparatus 1 by pressing fuel cartridge 3 by hand while connecting electronic apparatus 1 and fuel cartridge 3 to each other. In addition, when an excessive force is applied to fuel cartridge 3 in a state in which fuel cartridge 3 is connected to electronic apparatus 1, fuel cartridge 3 and electronic apparatus 1 may be damaged in the vicinity of the connector parts thereof. The fifth to ninth exemplary embodiments aim to solve such problems.

Apparatus holder part 41 in this exemplary embodiment includes supporting part 411 in a position facing first connector 5. Supporting part 411 presses electronic apparatus 1 with respect to first connector 5. Furthermore, apparatus holder part 41 has positioning part 412 that is in contact with the side surface of electronic apparatus 1 and positions electronic apparatus 1 with respect to first connector 5.

Next, a connection structure of connector part 11 of electronic apparatus 1 and first connector 5 is described. Fig. 8 is a sectional view showing structures of first connector 5 and connector part 11 of electronic apparatus 1 in the fuel supply device in accordance with this exemplary embodiment. Connector part 11 includes valve body 12, O-rings 13 and 14 and spring 15. Furthermore, reference plane 16 is formed in the periphery of concave-shaped connector part 11. On the other hand, first connector 5 includes nozzle part 71, O-rings 72 and 75, valve body 73 and spring 74.

In this configuration, procedure in which connector part 11 and first connector 5 connect to each other is described. Firstly, nozzle part 71 of connector part 11 is inserted into first connector 5. At this time, O-ring 72 is brought into close contact with the inner wall of connector part 11, and sealing is secured between connector part 11 and first connector 5. When nozzle part 71 continues to be inserted, valve body 12 and valve body 73 are brought into contact with each other at the respective protrusions. Herein, spring 74 is set to be stronger than spring 15. Therefore, valve body 12 is pushed up earlier and the sealing by O-ring 14 is released. That is to say, the valve of connector part 11 is opened.

Furthermore, nozzle part 71 continues to be inserted, the tip of nozzle part 71 is brought into contact with O-ring 13, and thus a top shield is formed by O-ring 13. When nozzle part 71 is further inserted, since valve body 12 reaches upper dead point, valve body 73 is pushed down. As a result, the sealing by O-ring 75 is released. That is to say, the valve of first connector 5 is opened. Then, reference plane 16 and reference plane 76 of first connector 5 are brought into contact with each other. Thus, the operation of inserting nozzle part 71 into connector part 11 is completed.

As mentioned above, valves of connector part 11 and first connector 5 are opened while connector part 11 and first connector 5 are doubly sealed, and a route for supplying fuel is opened. Thus, connector part 11 and first connector 5 have mechanisms for preventing fuel from leaking to the outside. Furthermore, by securing the accuracy between reference planes 16 and 76 and opening positions of the valve, regardless of the full length of electronic apparatus 1, the above-mentioned valve sequence can be reliably performed even if the insertion length is extremely small. Note here that, although not shown, a connector part of fuel cartridge 3 and second connector 6 have also the same structure.

In a fuel supply device having such a structure, a user inserts electronic apparatus 1 into holder 4 while the user slightly presses up supporting part 411 provided on holder 4. Then, connector part 11 of electronic apparatus 1 is joined to first connector 5, while electronic apparatus 1 is brought into contact with positioning part 412. Furthermore, electronic apparatus 1 is installed in apparatus holder part 41 so that supporting part 411 presses electronic apparatus 1 with respect to first connector 5.

In the fuel supply device of this exemplary embodiment, as mentioned above, only by fitting electronic apparatus 1 into apparatus holder part 41, first connector 5 can be connected to electronic apparatus 1. In this state, when second connector 6 is connected to fuel cartridge 3, fuel in fuel cartridge 3 can be sent to the power generation section 2 side. Therefore, electronic apparatus 1 and fuel cartridge 3 can be connected to each other easily. Furthermore, fuel cartridge 3 is not directly linked to electronic apparatus 1, and moreover, electronic apparatus 1 is held by holder 4. Therefore, the possibility that fuel cartridge 3 and electronic apparatus 1 may be damaged in the respective connector parts or in the vicinity thereof is reduced.

Furthermore, 1 since supporting part 411 is fixed by pressing electronic apparatus 1, electronic apparatus 1 can be held stably during supply of fuel. Therefore, a user is not required to hold electronic apparatus 1. In addition, in case that the force of a spring for securing sealing between connector part 11 of electronic apparatus 1 and first connector 5 is larger than the self weight of electronic apparatus 1, supporting part 411 presses electronic apparatus 1 so as to support the force of the spring. Therefore, a user is not required to continue to press electronic apparatus 1 with respect to holder 4. Therefore, it becomes easy for children and elderly persons to supply fuel to the electronic apparatus 1 side.

Note here that in Fig. 7, second connector 6 is disposed apart from holder 4 but it may be provided on the side surface at the opposite side to apparatus holder part 41 of holder 4. When second connector 6 is disposed in this location, fuel cartridge 3 can be joined to second connector 6 by sliding fuel cartridge 3 on the floor so as to allow holder 4 to face fuel cartridge 3.

It is preferable that first connector 5 and second connector 6 have shapes that can be joined to each other. When electronic apparatus 1 and fuel cartridge 3 have connector parts that can be directly joined to each other, electronic apparatus 1 and first connector 5, and fuel cartridge 3 and second connector 6 can be joined to each other, respectively. Therefore, first connector 5 and second connector 6 can be joined to each other. Thus, it is possible to prevent wrongly connecting another fuel cartridge that has connector parts with different types and shapes and that is not suitable for electronic apparatus 1.

In Fig. 7, first connector 5 has a convex shape and second connector 6 has a concave shape. However, when the connector parts of electronic apparatus 1 and fuel cartridge 3 have a convex shape and a concave shape respectively, accordingly first connector 5 may have a concave shape and second connector 6 may have a convex shape. That is to say, they may have either shape as long as they can be joined to electronic apparatus 1 and fuel cartridge 3, respectively.

In particular, it is preferable that diameter of first connector 5 is smaller than the length of electronic apparatus 1 in the thickness direction. In this configuration, when a connector part is provided on the position whose width is the narrowest on the side surface or bottom surface of electronic apparatus 1 in this way, the effect of facilitating the connection with respect to fuel cartridge 3 can be exhibited.

### (SIXTH EXEMPLARY EMBODIMENT)

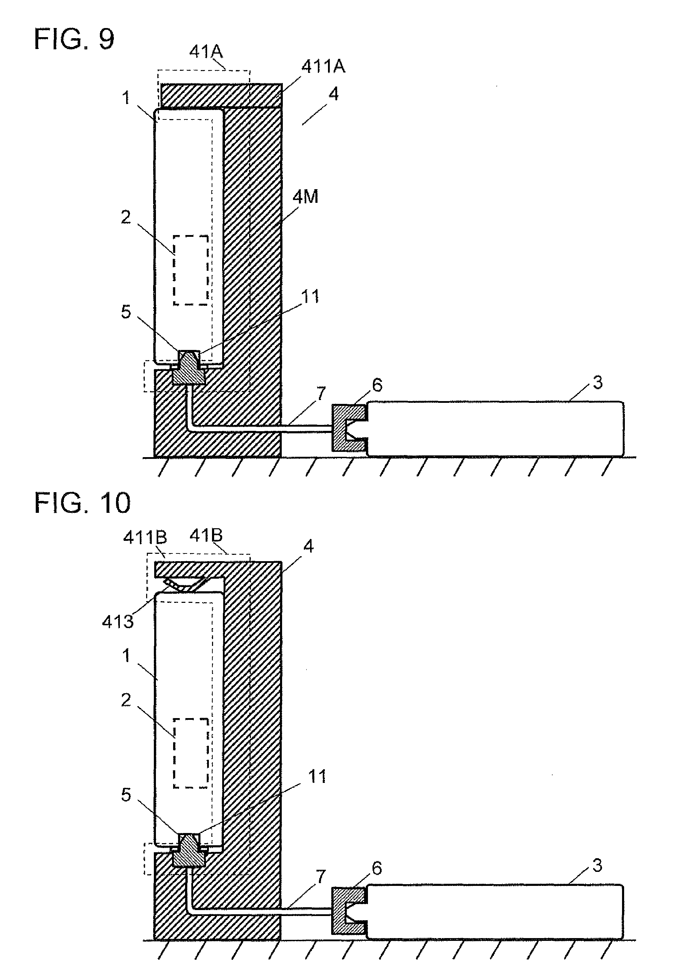

Figs. 9 and 10 are schematic sectional views showing a state in which electronic apparatus 1 and fuel cartridge 3 are connected to a fuel supply device in accordance with a sixth exemplary embodiment of the present invention. This exemplary embodiment is different from the fifth exemplary embodiment in the structure of holder 4. That is to say, supporting part 411 in Fig. 7 is deformed so that it is pressed up when electronic apparatus 1 is installed in holder 4. However, the configuration of supporting part 411 is not necessarily limited to this configuration.

Holder 4 in Fig. 9 has apparatus holder part 41A on which electronic apparatus 1 is mounted. First connector 5 is provided at apparatus holder part 41A. Apparatus holder part 41A has supporting part 411A in a position facing first connector 5, and supporting part 411A presses electronic apparatus 1 with respect to first connector 5. Supporting part 411A is provided on the upper part of main body part 4M such that it is slidable with respect to main body part 4M.

When electronic apparatus 1 is installed on the thus configured holder 4, firstly, the upside of first connector 5 is released by sliding supporting part 411A. Then, electronic apparatus 1 is inserted from the upside along main body part 4M, and connector part 11 is joined to first connector 5. Then, supporting part 411A is returned to the position shown in Fig. 9 by sliding supporting part 411A so as to press electronic apparatus 1 with respect to first connector 5. Even when holder 4 having such a structure is used, the same effect as that in the fifth exemplary embodiment can be obtained.

Furthermore, holder 4 in Fig. 10 has apparatus holder part 41B on which electronic apparatus 1 is mounted. First connector 5 is provided at apparatus holder part 41B. Apparatus holder part 41B has supporting part 411B in the position facing first connector 5, and supporting part 411B presses electronic apparatus 1 with respect to first connector 5. Supporting part 411B has flat spring part 413 as an elastic member.

When electronic apparatus 1 is installed in the thus configured holder 4, electronic apparatus 1 is fitted into apparatus holder part 41B by deforming flat spring part 413. Thus, connector part 11 is joined to first connector 5. Herein, flat spring part 413 is set to be stronger than spring 74. Then, after electronic apparatus 1 is installed, flat spring part 413 presses electronic apparatus 1 with respect to first connector 5. Also when holder 4 having such a structure is used, the same effect as that in the fifth exemplary embodiment can be obtained. Furthermore, flat spring part 413 holds electronic apparatus 1 so that electronic apparatus 1 is movable in the vertical direction with respect to holder 4.

Mechanical keys may be formed on connector part 11 of electronic apparatus 1 and a connector part of fuel cartridge 3. They are formed in order to connect only fuel cartridge 3 that is a type suitable for electronic apparatus 1 and not to connect a wrong type fuel cartridge.

The type of fuel cartridge 3 includes kinds and concentrations of fuels, the presence of an internal pressure for sending fuel, and the like. When fuel that is not suitable for power generation section 2 of electronic apparatus 1 is used, the possibility that the performance of the fuel cell of power generation section 2 may be degraded is high.

For such electronic apparatus 1, a mechanical key is required to be formed also on first connector 5. At this time, unless connector part 11 of electronic apparatus 1 and the mechanical key of first connector 5 match to each other, both are not joined. In such a case, if electronic apparatus 1 is forcedly inserted into apparatus holder part 41B so as to join connector part 11 and first connector 5 to each other, connector part 11, first connector 5, or holder 4 may be damaged. However, in this exemplary embodiment, flat spring part 413 as an elastic member holds electronic apparatus 1 so that it is movable in the vertical direction with respect to holder 4. Consequently, the above-mentioned damage can be prevented. Note here that instead of flat spring part 413, other elastic members such as rubber may be used.

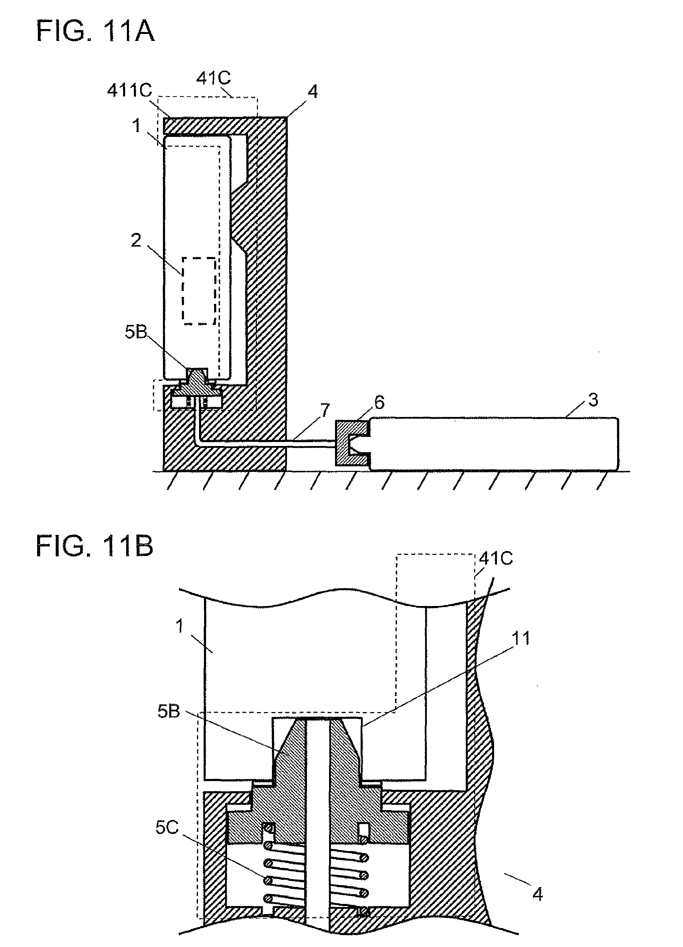

Furthermore, holder 4 shown in Figs. 11A and 11B may be used. Fig. 11A is a schematic sectional view showing a state in which electronic apparatus 1 and fuel cartridge 3 are connected to a fuel supply device using further different holder 4 in accordance with the sixth exemplary embodiment of the present invention; and Fig. 11B is a sectional view showing a principal part thereof. However, detailed structures as shown in Fig. 8 are omitted.

Holder 4 shown in Figs. 11A and Fig. 11B has spring 5C as an elastic member on apparatus holder part 41C. Spring 5C is set stronger than spring 74 and allows first connector 5B to be movable in the vertical direction with respect to holder 4. Also in this configuration, the same effect as that in the configuration shown in Fig. 10 is obtained. In this configuration, supporting part 411C supports the force of spring 5C. Note here that instead of spring 5C, other elastic members such as rubber may be used.

### (SEVENTH EXEMPLARY EMBODIMENT)

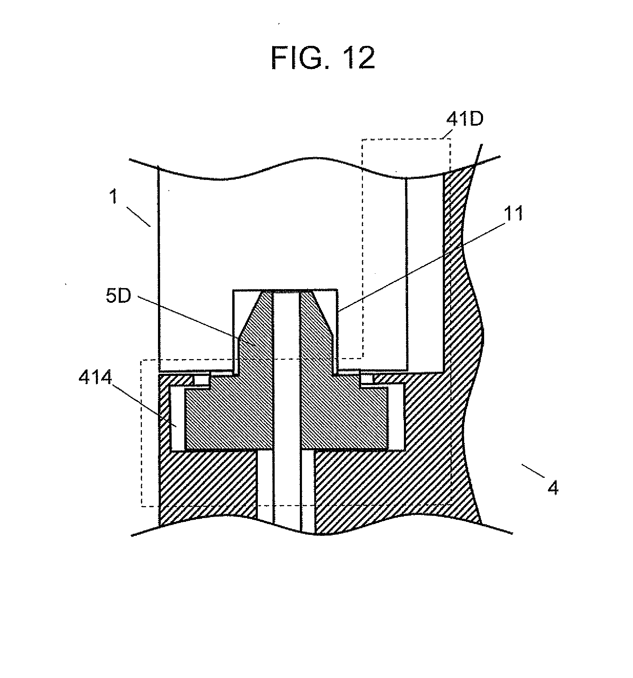

Fig. 12 is a sectional view showing a principal part of holder 4 of a fuel supply device in accordance with a seventh exemplary embodiment of the present invention. However, detailed structures as shown in Fig. 8 are omitted.

This exemplary embodiment is different from the fifth exemplary embodiment in that first connector 5D is provided at apparatus holder part 41D with allowance 414 included between first connector 5D and holder 4. When first connector 5D has allowance 414 between first connector 5D and holder 4 in this way, excessive force in the horizontal direction is not applied to these parts when first connector 5 is guided into connector part 11, and therefore damage can be prevented.

### (EIGHTH EXEMPLARY EMBODIMENT)

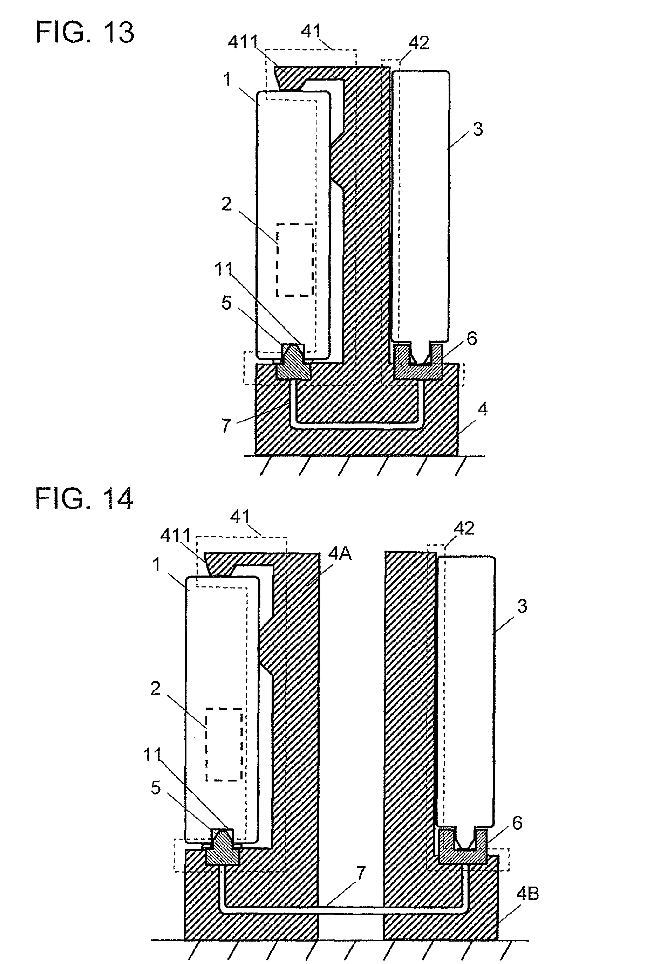

Fig. 13 is a schematic sectional view showing a state in which electronic apparatus 1 and fuel cartridge 3 are connected to a fuel supply device in accordance with an eighth exemplary embodiment of the present invention. This exemplary embodiment is different from the fifth exemplary embodiment in that holder 4 further includes cartridge holder part 42 capable of holding fuel cartridge 3 and second connector 6 is provided at cartridge holder part 42. The other configurations are the same as those in the fifth exemplary embodiment. That is to say, in this exemplary embodiment, apparatus holder part 41 in the fifth exemplary embodiment is applied to a structure shown in Fig. 2 in the second exemplary embodiment.

Thus, since holder 4 can hold also fuel cartridge 3, only by setting both electronic apparatus 1 and fuel cartridge 3 on holder 4, both can be easily connected.

Fig. 14 is a schematic sectional view showing a state in which electronic apparatus 1 and fuel cartridge 3 are connected to another fuel supply device in accordance with this exemplary embodiment. The fuel supply device shown in Fig. 14 is different from the fuel supply device shown in Fig. 13 in that holder 4 is divided into first holder 4A and second holder 4B and that apparatus holder part 41 is provided on first holder 4A and cartridge holder part 42 is provided on second holder 4B. That is to say, this exemplary embodiment has a configuration in which apparatus holder part 41 of the fifth exemplary embodiment is applied to the structure shown in Fig. 3 in the second exemplary embodiment. Also when the thus divided first holder 4A and second holder 4B are used and electronic apparatus 1 and fuel cartridge 3 are mounted on first holder 4A and second holder 4B respectively, the same effect as that in Fig. 13 can be obtained.

### (NINTH EXEMPLARY EMBODIMENT)

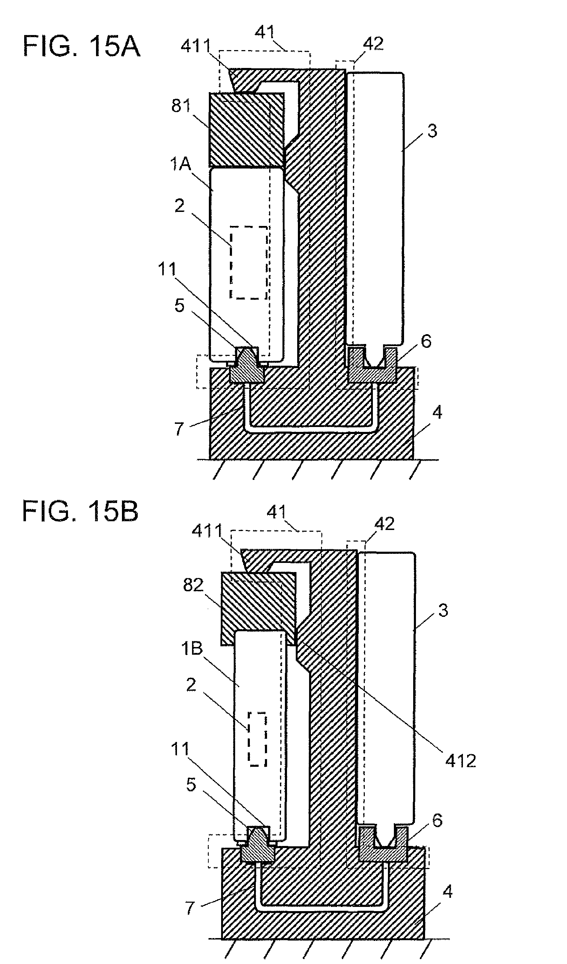

Figs. 15A and 15B are schematic sectional views showing a state in which electronic apparatus 1 and fuel cartridge 3 are connected to a fuel supply device in accordance with a ninth exemplary embodiment. This exemplary embodiment is different from the eighth exemplary embodiment shown in Fig. 13 in that electronic apparatuses 1A and 1B as second apparatuses having different external shape from that of electronic apparatus 1 are installed. Therefore, holding members 81 and 82 are provided. Holding members 81 and 82 corresponds to electronic apparatuses 1A and 1B and detachable with respect to electronic apparatuses 1A and 1B and apparatus holder part 41, respectively.

In an example shown in Fig. 15A, the total length when holding member 81 is installed on electronic apparatus 1A that is shorter as compared with electronic apparatus 1 corresponds to the length from first connector 5 to supporting part 411. Thus, electronic apparatus 1A on which holding member 81 is installed can be installed on apparatus holder part 41.

On the other hand, in an example shown in Fig. 15B, holding member 82 is installed on electronic apparatus 1B whose length and thickness are shorter as compared with those of electronic apparatus 1. The total length in a state in which holding member 82 is installed on electronic apparatus 1B corresponds to the length from first connector 5 to supporting part 411 and holding member 82 is brought into contact with positioning part 412, thereby connector part 11 of electronic apparatus 1B can be appropriately inserted into first connector 5. Thus, electronic apparatus 1B on which holding member 82 is installed can be installed on apparatus holder part 41.

Thus, electronic apparatuses 1A and 1B having different external shape from that of electronic apparatus 1 can be installed on holder 4 by using holding members 81 and 82, respectively. Therefore, versatility of the fuel supply device is improved.

### INDUSTRIAL APPLICABILITY

A fuel supply device of the present invention facilitates joining (connection) between a fuel cartridge and an electronic apparatus. Therefore, it becomes easy to supply fuel to an electronic apparatus. Furthermore, it becomes easy for children and elderly persons to supply fuel to the electronic apparatus side. Furthermore, since a fuel cartridge is not directly linked to an apparatus and the apparatus is held by a holder, the possibility that a fuel cartridge or an apparatus are damaged in the respective connector parts or in the peripheries thereof is reduced. This fuel supply device is useful because it improves the convenience in a system in which fuel is supplied to a small electronic apparatus via small connectors.

## Claims

1. A fuel supply device for connecting an apparatus including at least a part of a power generation section having a fuel cell and a fuel cartridge to each other so as to send fuel in the fuel cartridge to the power generation section, the fuel supply device comprising:
a holder having an apparatus holder part on which the apparatus is mounted;
a first connector provided at the apparatus holder part and to be connected to the apparatus;
a second connector to be connected to the fuel cartridge; and
a connection pipe connecting the first connector with the second connector.

2. The fuel supply device according to claim 1,
wherein the holder further includes a cartridge holder part capable of holding the fuel cartridge, and the second connector is provided at the cartridge holder part.

3. The fuel supply device according to claim 1,
wherein the holder includes a first holder having the apparatus holder part and a second holder having a cartridge holder part capable of holding the fuel cartridge, and
the second connector is provided at the cartridge holder part.

4. The fuel supply device according to claim 1,
wherein the first connector and the second connector have shapes capable of being joined to each other.

5. The fuel supply device according to claim 4,
wherein the first connector and the second connector form a pair of mechanical keys having special shapes capable of being joined to each other.

6. The fuel supply device according to claim 5,
wherein the first connector is rotatable with respect to the holder.

7. The fuel supply device according to claim 6,
wherein the first connector has an operation part that protrudes from the holder for rotating the first connector.

8. The fuel supply device according to claim 1,
wherein the first connector has a diameter that is smaller than a length in a thickness direction of the apparatus.

9. The fuel supply device according to claim 1,
wherein the apparatus holder part has a supporting part in a position facing the first connector, the supporting part being configured to press the apparatus with respect to the first connector.

10. The fuel supply device according to claim 9,
wherein the first connector is provided at the apparatus holder part with allowance included between the first connector and the holder.

11. The fuel supply device according to claim 9,
wherein the holder further includes an elastic member so that the holder movably holds the first connector.

12. The fuel supply device according to claim 9,
wherein the supporting part has an elastic member.

13. The fuel supply device according to claim 9, further comprising a holding member corresponding to a second apparatus having a different external shape from the apparatus, and being detachable with respect to the second apparatus and the apparatus holder part,
wherein a total length when the holding member is installed in the second apparatus corresponds to the length from the first connector to the supporting part, and the second apparatus on which the holding member is installed can be installed on the apparatus holder part.
